# EUROPEAN PATENT APPLICATION

(11) **EP 4 510 234 A1**
(43) Date of publication of application: **19.02.2025**
(21) Application number: 24746173.4
(22) Date of filing: 26.06.2024
(51) Int. Cl.: H01M 4/58, H01M 10/054, C01C 3/12

(54) **PRUSSIAN BLUE POSITIVE ELECTRODE MATERIAL AND PREPARATION METHOD THEREFOR, POSITIVE ELECTRODE SHEET AND SODIUM-ION BATTERY**

(30) Priority: 27.06.2023 CN 202310772356
(71) Applicant: Hubei Wanrun New Energy Technology Co., Ltd., Shiyan, Hubei 442500 (CN); Hubei Yuhao High-Tech New Material Co., Ltd., Shiyan, Hubei 442000 (CN)
(72) Inventor: LIU, Shiqi, Shiyan, Hubei 442500 (CN); WANG, Huanwen, Shiyan, Hubei 442500 (CN); SHEN, Xiang, Shiyan, Hubei 442500 (CN); ZHENG, Zhi, Shiyan, Hubei 442500 (CN); ZHANG, Taoqiu, Shiyan, Hubei 442500 (CN); LV, Fei, Shiyan, Hubei 442500 (CN); LIAO, Yaodong, Shiyan, Hubei 442500 (CN)
(74) Representative: Viering, Jentschura & Partner mbB Patent- und Rechtsanwälte
(86) International application number: PCT/CN2024/101649
(87) International publication number: WO 2025/002182

(57) **Abstract**

The present disclosure provides Prussian blue cathode material and preparation method therefor, cathode sheet and sodium-ion battery. The Prussian blue cathode material includes a Prussian blue compound, and the Prussian blue compound has a general chemical formula of NaₓFe[Fe(CN)₆]_{y}·nH₂O. The Prussian blue cathode material provided by the present disclosure has a simple synthesis method and a low raw material cost, and when applied to a sodium-ion battery, is conducive to improving the performance of the sodium-ion battery in terms of specific capacity, coulomb efficiency, rate performance and long cycle stability, etc.

## Description

### Cross-Reference to Related Application

The present application claims the priority of a Chinese patent application No. 202310772356.6, filed to China National Intellectual Property Administration on June 27, 2023, with the title of "PRUSSIAN BLUE CATHODE MATERIAL, PREPARATION METHOD THEREFOR AND APPLICATION THEREOF", the entire contents of which are incorporated herein by reference.

### Technical Field

The present disclosure belongs to the technical fields of batteries and electrochemical energy storage, and particularly relates to Prussian blue cathode material and preparation method therefor, cathode sheet and sodium-ion battery.

### Background

Energy storage has become a key issue for utilizing renewable energy and promoting a smart grid in modern society. Room temperature sodium-ion batteries (SIBs) operate under similar chemical conditions as lithium-ion batteries (LIBs), and due to abundance and a low cost of sodium in the world, have become promising candidates for energy storage systems (ESSs). Rechargeable sodium-ion batteries (SIBs), due to abundant resources and controllable costs, are emerging and have become highly promising candidates in applications of large-scale energy storage systems. Prussian blue (PB) and its analogs (PBAs) thereof have been considered as potential cathodes, and due to inherent rigid open frameworks and large-gap sodium storage sites, high theoretical capacities and non-toxic properties, have attracted increasing attention. In addition, convenient synthesis processes and low costs of the PBAs are also highly attractive to potential large-scale applications. However, due to low electron conductivity and defects of the frameworks of the PBAs, the PBAs have poor rate capability and cycle stability.

In a typical PB framework, an iron center is present as a low-spin (Fe^{LS}(C)) or high-spin (Fe^{HS}(N)) structure, depending on whether an iron atom is located on a carbon side or a nitrogen side of a cyanide ligand. The Fe^{LS}(C) and the Fe^{HS}(N) participate in a redox reaction of sodium storage at different potentials and theoretically provide a same number of coulombs, because in a perfect PB framework, two Fe sites are equal in number. However, existing documents show that compared with Fe^{HS}(N) redox reaction couples, Fe^{LS}(C) redox reaction couples have much lower capacity contribution. In addition, such low-spin Fe^{LS}(C) redox couples without full activation have electrochemical activity at higher potentials, which will inevitably drag down an average potential platform of the PBA-based cathodes. It has been reported that the Fe^{LS}(C) redox couples are activated by reducing with water or doping with other transition metals. Although the cycle stability is optimized, the capacity is sacrificed. Therefore, in order to achieve full potential of the PBA-based cathode materials, the problem needs to be solved urgently, and unsatisfactory rate capability is another obstacle in commercialization of PBA materials.

### SUMMARY

In view of this, the purpose of the present disclosure is to provide Prussian blue cathode material, preparation method therefor and application thereof, so as to solve the problem of low capacities caused by optimizing cycle stability when existing Prussian blue materials are applied to sodium-ion batteries. The cathode material provided by the present disclosure has high rate performance and good cycle stability.

In view of this, the purpose of the present disclosure is to provide a Prussian blue cathode material, a preparation method therefor and application thereof, so as to solve the problem of low capacities caused by optimizing cycle stability of existing Prussian blue materials. The cathode material provided by the present disclosure has high rate performance and good cycle stability.

In a first aspect, the present disclosure provides a Prussian blue cathode material having a general chemical formula:

NaₓFe[Fe(CN)]₆·nH₂O Formula I,

in Formula I, x is 0.01-3, and
n is 0.01-3.

In embodiments of the present disclosure, the x may be selected from 0.05, 0.1, 0.5, 1, 1.5, 2, or 2.5; when the x is less than 1.5, the Prussian blue cathode material obtained has better cycle stability, a low Na ion content belonging to a sodium-deficient state, a high reaction speed, fewer lattice defects and a lower water content, thus having better performance; the n may be selected from 0.05, 0.1, 0.5, 1, 1.5, 2, or 2.5; and both the x and the n are a molar ratio.

The Prussian blue cathode material provided by the present disclosure has a cubic structure.

In embodiments of the present disclosure, the Prussian blue cathode material has a nanocubic size of 500 nm-2,000 nm.

In a second aspect, the present disclosure provides a preparation method for a Prussian blue cathode material, including:
mixing a solution A and a solution B to obtain a solid precipitate; and
subjecting the solid precipitate to washing and drying to obtain a Prussian blue cathode material;
where the solution A includes: a carbonaceous material, sodium ferrocyanide, and a first solvent; and
the solution B includes: an iron salt, sodium citrate, and a second solvent.

In embodiments of the present disclosure, the carbonaceous material may be selected from conductive carbon black, activated carbon, etc., for example, may be Ketjen black.

In embodiments of the present disclosure, the first solvent may include: water and a solvent A; the water may be selected from deionized water; the solvent A may be selected from one or more of ethylene glycol, N,N-dimethylformamide, ethanol, and glycerol, such as ethylene glycol; and a volume ratio of the water and the solvent A may be selected from 1 :(0.01-100), such as 1 :(0.05-90), 1 :(0.1-80), 1 :(0.5-70), 1:(1-60), 1:(5-50), 1:(10-40), or 1:(20-30). In embodiments of the present disclosure, a preparation method for the first solvent may include: evenly mixing the water and the solvent A; the mixing is carried out under stirring conditions; and a stirring time may be selected from 1 min-100 min, such as 5 min, 10 min, 20 min, 30 min, 40 min, 50 min, 60 min, 70 min, 80 min, or 90 min.

In embodiments of the present disclosure, a concentration of the sodium ferrocyanide in the solution A may be selected from 0.1 g/L-100 g/L, such as 0.5 g/L, 1 g/L, 10 g/L, 20 g/L, 30 g/L, 40 g/L, 50 g/L, 60 g/L, 70 g/L, 80 g/L, or 90 g/L.

In embodiments of the present disclosure, a preparation method for the solution A may include:
dispersing the carbonaceous material in the first solvent to obtain a dispersion solution, and then dissolving the sodium ferrocyanide in the dispersion solution to obtain the solution A.

In embodiments of the present disclosure, the dispersing may be carried out by ultrasonic stirring.

In embodiments of the present disclosure, the iron salt may be selected from a bivalent iron salt, such as one or more of FeSO₄·7H₂O, Fe(NO₃)₂, and FeCl₂·4H₂O.

In embodiments of the present disclosure, the sodium citrate may be selected from one or more of anhydrous sodium citrate, sodium citrate dihydrate, and sodium citrate pentahydrate.

In embodiments of the present disclosure, the second solvent may include: water and a solvent B; the water may be selected from deionized water; the solvent B may be selected from one or more of ethylene glycol, N,N-dimethylformamide, ethanol, and glycerol, such as ethylene glycol; and a volume ratio of the water and the solvent B may be selected from 1:(0.01-100), such as 1:(0.05-90), 1:(0.1-80), 1:(0.5-70), 1:(1-60), 1:(5-50), 1:(10-40), or 1:(20-30). In embodiments of the present disclosure, a preparation method for the second solvent may include: evenly mixing the water and the solvent B; the mixing is carried out under stirring conditions; and a stirring time may be selected from 1 min-100 min, such as 5 min, 10 min, 20 min, 30 min, 40 min, 50 min, 60 min, 70 min, 80 min, or 90 min.

In embodiments of the present disclosure, a preparation method for the solution B may include:
dissolving the iron salt and the sodium citrate in the second solvent to obtain the solution B.

In embodiments of the present disclosure, the uniform solution B may be obtained by stirring and dissolving.

In embodiments of the present disclosure, a molar ratio of the carbonaceous material and the sodium ferrocyanide may be selected from 1:(1-100), such as 1:(5-90), 1:(10-80), 1:(20-70), 1:(30-60), or 1:(40-50); a molar ratio of the sodium ferrocyanide and the iron salt may be selected from 1:(1-3), such as 1:2; a molar ratio of the iron salt and the sodium citrate may be selected from 1:(1-100), such as 1:(5-90), 1:(10-80), 1:(20-70), 1:(30-60), or 1:(40-50); and a volume ratio of the solution A and the solution B may be selected from 1:(0.1-10), such as 1:(0.5-9), 1:(1-8), 1:(2-7), 1:(3-6), or 1:(4-5).

In embodiments of the present disclosure, both the solvent A and the solvent B are a solvent insoluble in the sodium ferrocyanide, and are used for regulating the solubility and controlling the reaction rate, thereby controlling the generation of defects in a crystal growth process.

In embodiments of the present disclosure, the mixing may include dropping the solution A into the solution B, or dropping the solution B into the solution A; and a dropping rate may be selected from 0.1 mL/min-100 mL/min, such as 0.5 mL/min, 1 mL/min, 10 mL/min, 20 mL/min, 30 mL/min, 40 mL/min, 50 mL/min, 60 mL/min, 70 mL/min, 80 mL/min, or 90 mL/min.

In embodiments of the present disclosure, the solution A and the solution B are mixed to regulate the dissolution rate and control the reaction speed.

In embodiments of the present disclosure, the mixing may be a reaction; a mixing temperature may be selected from 5 °C -100 °C, such as 10 °C, 20 °C, 30 °C, 40 °C, 50 °C, 60 °C, 70 °C, 80 °C, or 90°C; the mixing may be carried out under stirring conditions, and a stirring speed may be selected from 100 rpm-1,500 rpm, such as 200 rpm, 300 rpm, 400 rpm, 500 rpm, 600 rpm, 700 rpm, 800 rpm, 900 rpm, 1,000 rpm, 1,100 rpm, 1,200 rpm, 1,300 rpm, or 1,400 rpm; and a mixing time may be selected from 12 h-72 h, such as 24 h, 36 h, 48 h, or 60 h.

In embodiments of the present disclosure, a washing reagent may be selected from water or ethanol, and the water may be selected from deionized water; the ethanol may be selected from anhydrous ethanol; and the water and the ethanol may be used for alternate washing, the washing with the water may be carried out for two times, and the washing with the ethanol may be carried out for one time.

In embodiments of the present disclosure, a drying temperature may be selected from 60 °C-120 °C, such as 70 °C, 80 °C, 90 °C, 100 °C, or 110 °C; and a drying time may be greater than 2 h.

In embodiments of the present disclosure, the preparation method for a Prussian blue cathode material may include:
evenly mixing deionized water and ethylene glycol by stirring at a volume ratio of 1:(0.01-50) for 10-60 min, then adding Ketjen black to a mixture and carrying out ultrasonic stirring until a dispersion is uniform; then, adding a raw material, sodium ferrocyanide (Na₄Fe(CN)₆·10H₂O), to the dispersion and carrying out stirring for 30 min to obtain a 5-50 g/L sodium ferrocyanide dispersion solution; then, according to a molar ratio of a bivalent iron salt and sodium citrate as 1:(0.01-100) and a molar ratio of the sodium ferrocyanide and a metal salt (total) as 1:(1-2), weighing and adding the bivalent iron salt and the sodium citrate to a certain volume of a mixed solution of deionized water and ethylene glycol to ensure that a volume ratio of the sodium ferrocyanide dispersion solution and a mixed metal salt solution is 1 :(0.1-10), and carrying out stirring for full dissolution to obtain a transparent mixed metal salt solution;
slowly dropping the mixed solution obtained above into another mixed solution through a constant pressure funnel or a peristaltic pump at a dropping rate of 1 mL/min-100 mL/min, meanwhile, carrying out a reaction at a reaction temperature of 5 °C-100 °C at a stirring rate of 100 rpm-1 ,500 rpm for 12 h-72 h, and then, carrying out filtration or centrifugation to obtain a blue Prussian blue precipitate; and
washing the Prussian blue precipitate obtained above with a detergent, and then placing the same in a vacuum oven for drying at 60 °C-120 °C for a drying time of greater than 2 h to obtain a Prussian blue cathode material for a sodium-ion battery in the present disclosure.

In embodiments of the present disclosure, the bivalent iron salt is selected from one or more of FeSO₄·7H₂O, Fe(NO₃)₂, and FeCl₂·4H₂O, and the sodium citrate is selected from one or more of anhydrous sodium citrate, sodium citrate dihydrate, and sodium citrate pentahydrate; and the detergent is selected from deionized water or anhydrous ethanol.

The present disclosure further provides a Prussian blue cathode material. The Prussian blue cathode material includes Prussian blue compound, the Prussian blue compound has a general chemical formula:

NaₓFe[Fe(CN)₆]_{y}·nH₂O Formula I,

in Formula I, x is 0.01-3, 0<y<1, and
n is 0.01-3.5.

When the Prussian blue cathode material provided by the present disclosure is applied to a sodium-ion battery, convenience is provided for improving the performance of the sodium-ion battery in terms of specific capacity, coulomb efficiency, rate performance and long cycle stability, etc.

The present disclosure further provides a preparation method for a Prussian blue cathode material, including:
mixing a first dispersion solution and a second dispersion solution to obtain a solid precipitate; and
subjecting the solid precipitate to washing and drying to obtain a Prussian blue cathode material;
wherein, the first dispersion solution includes: a ferrocyanide source, a first sodium source, and a first dispersing agent; and
the second dispersion solution includes: a bivalent iron source, a complexing agent, and a second dispersing agent.

According to the preparation method for a Prussian blue cathode material provided by the present disclosure, a Prussian blue compound is co-precipitated by mixing the ferrocyanide source, the first sodium source and the bivalent iron source, so as to obtain a Prussian blue cathode material, where the complexing agent and ferrous ions provided by the bivalent iron source achieve a strong complexation effect, which is conducive to controlling the generation rate of the Prussian blue compound, reducing defects of the Prussian blue compound, increasing the yield of the Prussian blue compound and improving the performance of the Prussian blue cathode material, and is conducive to improving the cycle stability, specific capacity, coulomb efficiency, rate performance and other properties of a sodium-ion battery to which the Prussian Blue cathode material prepared is applied.

The present disclosure further provides a cathode sheet. The cathode sheet includes the Prussian blue cathode material as described above; and alternatively, the cathode sheet includes a Prussian blue cathode material obtained by the preparation method for a Prussian blue cathode material as described above.

The cathode sheet provided in an embodiment of the present disclosure, by including the Prussian blue cathode material as described above or including a Prussian blue cathode material obtained by the preparation method for a Prussian blue cathode material as described above, is conducive to improving the performance of a sodium-ion battery in terms of specific capacity, coulomb efficiency, rate performance and long cycle stability when applied to the sodium-ion battery.

The present disclosure provides a sodium-ion battery, including: the Prussian blue cathode material as described in the foregoing technical solutions; or a Prussian blue cathode material prepared by the method as described in the foregoing technical solutions; or the cathode sheet as described in the foregoing technical solutions.

In embodiments of the present disclosure, the sodium-ion battery includes: a cathode electrode, an anode electrode, a diaphragm, and an electrolyte.

In embodiments of the present disclosure, a preparation method for the cathode electrode may include:
mixing a cathode material, a binder, a conductive agent and a solvent to obtain a slurry; and
coating the slurry on aluminum foil, and carrying out drying to obtain the cathode electrode.

In embodiments of the present disclosure, the cathode material is the Prussian blue cathode material as described in the foregoing technical solutions; the binder may be selected from polyvinylidene fluoride (PVDF); the conductive agent may be selected from Super P; a moar ratio of the cathode material, the binder and the conductive agent may be selected from (6-8):(1-3):(0.5-1.5), may also be selected from (6.5-7.5):(1.5-2.5):(0.8-1.2), and may further be selected from 7:2:1 ; and the solvent is selected from dimethylpyrrolidone.

In embodiments of the present disclosure, the anode electrode may be selected from metallic sodium; the diaphragm may be selected from a glass fiber membrane; and the electrolyte may be selected from 1.0 mol/L NaClO₄/EC (ethylene carbonate)+PC (polycarbonate)+FEC (fluoroacetate) (EC:PC:FEC=0.45:0.45:0.05, vol).

In embodiments of the present disclosure, the cathode electrode, the anode electrode, the diaphragm and the electrolyte can be assembled into a CR2032 button battery in a glove box.

The present disclosure provides a high-capacity and high-rate Prussian blue cathode material for a sodium-ion battery, where the cathode material has the chemical composition of NaₓFe[Fe(CN)]₆·nH₂O and has a stable and highly dispersed hierarchical structure (it can be observed through a scanning electron microscope that the Prussian blue material is not a regular cube, but bas cube-like morphology formed by stacking layer by layer) to ensure that high rate performance and good cycle stability are achieved. The preparation method for a Prussian blue cathode material for a sodium-ion battery provided by the present disclosure is low in raw material cost, simple in preparation process, easy to control, low in energy consumption, and suitable for industrial popularization.

The present disclosure provides a pure-phase Prussian blue cathode material for a sodium-ion battery, and the cathode material in the present disclosure is an Fe-based Prussian blue material and has a general chemical formula of NaₓFe[Fe(CN)]₆·nH₂O. In the present disclosure, by means of the characteristics that the sodium ferrocyanide is insoluble in the organic solvent used and easily soluble in water, the sodium ferrocyanide has differences in solubility in a mixed solvent of an organic solution and water at different volume ratios, such that a reaction system has two phases including a solid phase and a liquid phase, and a new synthesis mechanism of Prussian blue is formed. Because of the presence of the organic solvent in the reaction system, the reaction rate of various ions is slowed down to a certain extent. Excessive sodium citrate can not only achieve a strong complexation effect with ferrous ions, but also effectively increase the content of sodium ions in the solution, thereby greatly delaying the generation rate of a precipitate and effectively increasing the content of sodium ions in element composition of the precipitate. Combining the above characteristics, a reaction mechanism in the present disclosure can effectively control the generation rate of Prussian blue and effectively increase the yield. Therefore, the Prussian blue prepared by the method provided by the present disclosure has fewer defects and a higher yield.

The reaction mechanism of the Prussian blue cathode material for the sodium-ion battery in the present disclosure includes that: first, a small amount of solid-phase sodium ferrocyanide is partially dissolved in an organic solvent to generate Na⁺ and [Fe(CN)₆]⁴⁻ ions, and then, Na⁺ and [Fe(CN)₆]⁴⁻ undergo a co-precipitation reaction with water-soluble Fe²⁺ in the liquid phase. A new synthesis mechanism of the Prussian blue in a two-phase synthesis preparation process is conducive to reducing the reaction rate and controlling a crystal growth process, and Prussian blue crystals tend to grow on a surface of the formed precipitate during formation. Therefore, the prepared Prussian blue has a stable and highly dispersed hierarchical micro-nano structure formed by self-assembly of microcubes, and has the characteristics of an appropriate crystal particle size, a large specific surface area and a high sodium ion migration rate and the like, so as to ensure that large rate performance and good cycle stability can be obtained. Studies in specific embodiments show that the battery obtained in the present disclosure has a specific capacity of greater than 100 mA-g-¹ after 200 cycles and a specific capacity of greater than 84 mA g⁻¹ after 800 cycles. According to the Prussian blue cathode material for the sodium-ion battery in the present disclosure, because a certain amount of Ketjen black is added, the disadvantage of poor electrical conductivity of a single Prussian blue cathode material is greatly improved, and the Ketjen black, as common conductive carbon black, is less difficult to obtain and controllable in cost. According to the method provided by the present disclosure, raw materials used are cheap and easy to obtain, a synthesis process is safe and controllable, energy consumption is low, and waste liquid generated in the reaction system is less difficult to recycle. Therefore, the method has a large-scale production capability.

### Brief Description of the Drawings

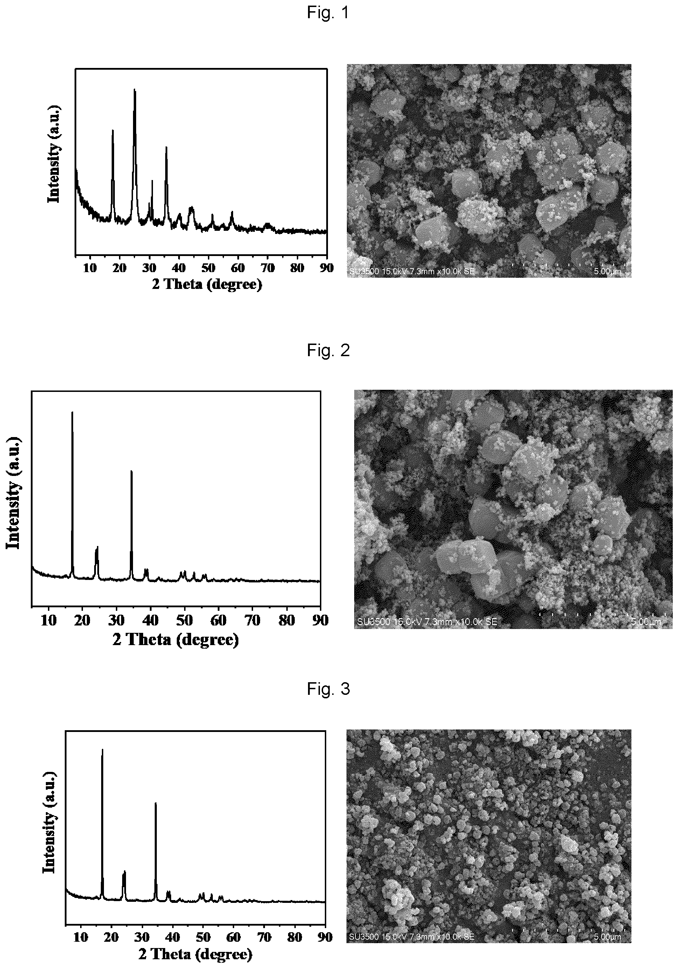

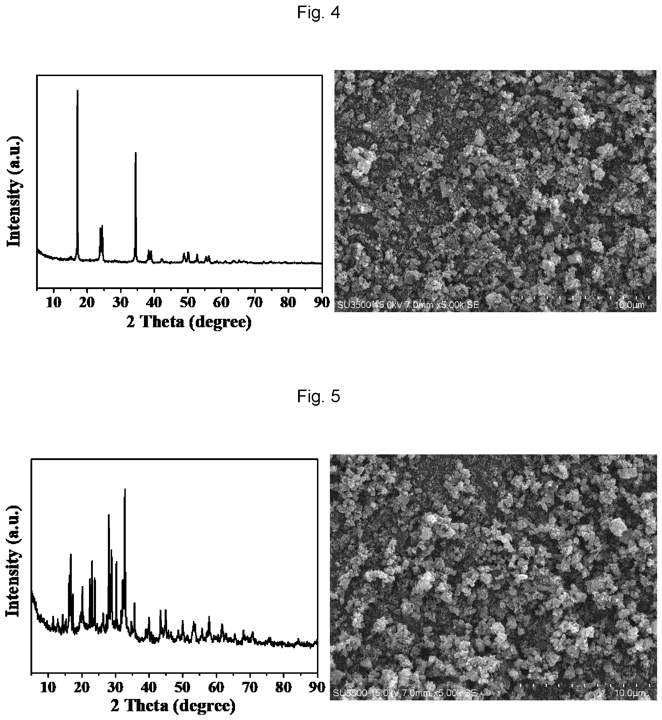

Part (a) in Fig. 1 shows an X-ray diffraction diagram of a cathode material prepared in Embodiment 1;
Part (b) in Fig. 1 shows a scanning electron microscope image of the cathode material prepared in Embodiment 1;
Part (a) in Fig. 2 shows an X-ray diffraction diagram of a cathode material prepared in Embodiment 2;
Part (b) in Fig. 2 shows a scanning electron microscope image of the cathode material prepared in Embodiment 2;
Part (a) in Fig. 3 shows an X-ray diffraction diagram of a cathode material prepared in Embodiment 3;
Part (b) in Fig. 3 shows a scanning electron microscope image of the cathode material prepared in Embodiment 3;
Part (a) in Fig. 4 shows an X-ray diffraction diagram of a cathode material prepared in Comparative Embodiment 1;
Part (b) in Fig. 4 shows a scanning electron microscope image of the cathode material prepared in Comparative Embodiment 1;
Part (a) in Fig. 5 shows an X-ray diffraction diagram of a cathode material prepared in Comparative Embodiment 2;
Part (b) in Fig. 5 shows a scanning electron microscope image of the cathode material prepared in Comparative Embodiment 2;

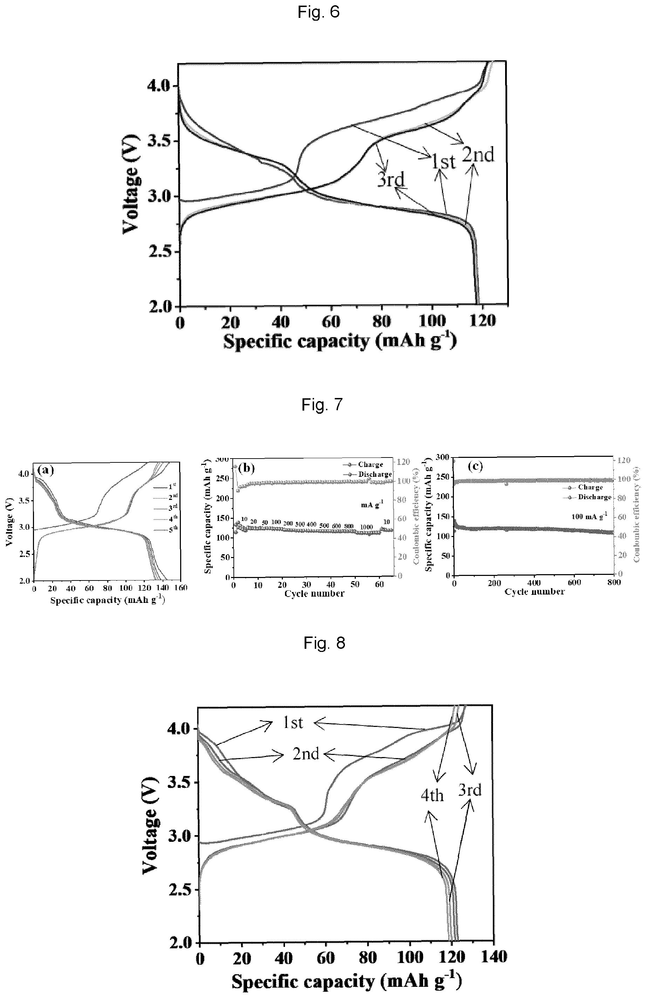

Fig. 6 shows a diagram showing charge and discharge performance of the cathode material prepared in Embodiment 1;
Part (a) in Fig. 7 shows a diagram showing charge and discharge performance of the cathode material prepared in Embodiment 2;
Part (b) in Fig. 7 shows a diagram showing rate performance of the cathode material prepared in Embodiment 2;
Part (c) in Fig. 7 shows a diagram showing cycle performance of the cathode material prepared in Embodiment 2;
Fig. 8 shows a diagram showing charge and discharge performance of the cathode material prepared in Embodiment 3;
Fig. 9 shows a diagram showing charge and discharge performance of the cathode material prepared in Comparative Embodiment 1; and
Fig. 10 shows a diagram showing charge and discharge performance of the cathode material prepared in Comparative Embodiment 2.

### Detailed Description of the Embodiments

Technical solutions in embodiments of the present disclosure are clearly and completely described below. Obviously, the embodiments described are only a part of the embodiments of the present disclosure, rather than all of the embodiments. On the basis of the embodiments of the present disclosure, all other embodiments obtained by persons of ordinary skill in the art without creative labor fall within the scope of protection of the present disclosure.

An embodiment of the present disclosure provides a Prussian blue cathode material. The Prussian blue cathode material includes Prussian blue compound, the Prussian blue compound has a general chemical formula:

NaₓFe[Fe(CN)₆]_{y}·nH₂O Formula I,

in Formula I, x is 0.01-3, 0<y<1, and
n is 0.01-3.5.

When the Prussian blue cathode material provided by the present disclosure is applied to a sodium-ion battery, convenience is provided for improving the performance of the sodium-ion battery in terms of specific capacity, coulomb efficiency, rate performance and long cycle stability, etc.

In some embodiments, the x may be selected from 0.05, 0.1, 0.5, 1, 1.5, 2, 2.5, or any value between 0.01 and 3. Preferably, the x is less than 1.5, which enables a low Na ion content belonging to a sodium-deficient state and a high reaction speed, is conducive to reducing lattice defects and a water content of the Prussian blue compound so as to achieve better performance, and is conducive to improving the cycle stability, specific capacity, coulomb efficiency, rate performance and other properties of a sodium-ion battery to which the Prussian blue cathode material is applied. More preferably, the x is less than 1, which further controls the Prussian blue compound to stay in a sodium-deficient state, further increases the reaction speed and reduces the lattice defects and the water content of the Prussian blue compound, and is conducive to further improving the cycle stability, specific capacity, coulomb efficiency, rate performance and other properties of a sodium-ion battery to which the Prussian blue cathode material is applied. Meanwhile, the x is greater than 0.5, which controls the sodium ion content of the Prussian blue compound in a more appropriate range, and is more conducive to improving the cycle stability, specific capacity, coulomb efficiency, rate performance and other properties of a sodium-ion battery to which the Prussian blue cathode material is applied.

In some embodiments, the n may be selected from 0.05, 0.1, 0.5, 1, 1.5, 2, 2.5, 3, 3.1, 3.2, or any value between 0.01 and 3.5, so as to control the water content of the Prussian blue compound and achieve better performance, which is conducive to improving the cycle stability, specific capacity, coulomb efficiency, rate performance and other properties of a sodium-ion battery to which the Prussian blue cathode material is applied.

In some embodiments, the y is greater than 0 and less than 1, and the y may be selected from 0.05, 0.1, 0.15, 0.2, 0.25, 0.3, 0.5, 0.6, 0.65, 0.7, 0.8, 0.85, 0.9, 0.93, 0.95, 0.97, 0.99, or any value greater than 0 and less than 1.

In some embodiments, the y may be expressed as y=1-δ, where δ represents a vacancy content of ferrocyanide ions. The δ is greater than 0 and less than 1, and the δ may be selected from 0.01, 0.02, 0.03, 0.05, 0.06, 0.07, 0.08, 0.09, 0.1, 0.15, 0.2, 0.25, 0.3, 0.5, 0.6, 0.7, 0.8, or 0.9, etc.

Preferably, the y is greater than 0.8 and less than 1, namely, the δ is greater than 0 and less than 0.2, such that the lattice defects of the Prussian blue compound are controlled in a fewer state, the performance of the Prussian blue compound is improved, and convenience is provided for improving the cycle stability, specific capacity, coulomb efficiency, rate performance and other properties of a sodium-ion battery to which the Prussian blue cathode material is applied.

In some embodiments, when the y is expressed as y=1-δ, the general chemical formula of the Prussian blue compound may further be expressed as:

NaₓFe[Fe(CN)₆]_{1-δ}□_{δ}·nH₂O Formula II,

where, □ represents a vacancy of ferrocyanide ions. Value ranges of x, n and δ are the same as described above.

In some embodiments, at least some of crystals of the Prussian blue compound are in a cube-like shape, and that is to say, when the crystals of the Prussian blue compound are observed through a scanning electron microscope, the crystals of the Prussian blue compound exhibit an obvious cubic structure, but have the difference that intersections of edges of the crystals of the Prussian blue compound are arc-shaped.

In some embodiments, at least some of the crystals of the Prussian blue compound are in a sphere-like shape, and different from the crystals of the Prussian blue compound in the cube-like shape, when the crystals of the Prussian blue compound in the sphere-like shape are observed through a scanning electron microscope, edges of the crystals of the Prussian blue compound are arc-shaped.

In some embodiments, a size of the crystals of the Prussian blue compound is equal to greater than 0.1 µm, and the size of the crystals of the Prussian blue compound is equal to less than 2.5 µm, for example, the size of the crystals of the Prussian blue compound may be 0.5 µm, 0.6 µm, 0.8 µm, 1 µmn, 1.2 µm, 1.3 µm, 1.5 µm, 1.8 µm, 2 µm, 2.2 µm, 2.3 µm, or any size value between 0.1 µm and 2.5 µm.

In some embodiments, the chemical formula of the Prussian blue compound is selected from at least one of Na_{0.647}Fe[Fe(CN)₆]_{0.93}·2.6H₂O and Na_{0.517}Fe[Fe(CN)₆]_{0.85}·3.15H₂O, so as to obtain the Prussian blue compound with better performance, which is conducive to improving the cycle stability, specific capacity, coulomb efficiency, rate performance and other properties of a sodium-ion battery to which the Prussian blue cathode material is applied.

In some embodiments, the Prussian blue cathode material further includes a carbonaceous material, and the carbonaceous material is at least partially attached to surfaces of the crystals of the Prussian blue compound. Addition of the carbonaceous material is conducive to inhibiting the generation of defects and improving the electrical conductivity of the Prussian blue cathode material in a production process of the Prussian blue compound, and is conducive to improving the cycle stability, specific capacity, coulomb efficiency, rate performance and other properties of a sodium-ion battery to which the Prussian blue cathode material is applied.

In some embodiments, the carbonaceous material is selected from a conductive carbon black material, for example, may be Ketjen black. The conductive carbon black material is a common conductive carbon black material, which is conducive to inhibiting the generation of defects and improving the electrical conductivity of the Prussian blue cathode material in a production process of the Prussian blue compound, and is conducive to reducing the cost.

An embodiment of the present disclosure further provides a preparation method for a Prussian blue cathode material, including:
S100, mixing a first dispersion solution and a second dispersion solution to obtain a solid precipitate; and
S200, subjecting the solid precipitate to washing and drying to obtain a Prussian blue cathode material;
wherein, the first dispersion solution includes: a ferrocyanide source, a first sodium source, and a first dispersing agent; and
the second dispersion solution includes: a bivalent iron source, a complexing agent, and a second dispersing agent.

According to the preparation method for a Prussian blue cathode material provided by the present disclosure, a Prussian blue compound is co-precipitated by mixing the ferrocyanide source, the first sodium source and the bivalent iron source, so as to obtain a Prussian blue cathode material, where the complexing agent and ferrous ions provided by the bivalent iron source achieve a strong complexation effect, which is conducive to controlling the generation rate of the Prussian blue compound, reducing defects of the Prussian blue compound, increasing the yield of the Prussian blue compound and improving the performance of the Prussian blue cathode material, and is conducive to improving the cycle stability, specific capacity, coulomb efficiency, rate performance and other properties of a sodium-ion battery to which the Prussian Blue cathode material prepared is applied.

In some embodiments, a Prussian blue cathode material prepared by the preparation method for a Prussian blue cathode material is described as above.

In some embodiments, the step S100 includes:
S110, dispersing the ferrocyanide source and the first sodium source in the first dispersing agent to obtain the first dispersion solution;
S120, dispersing the bivalent iron source and the complexing agent in the second dispersing agent to obtain the second dispersion solution; and
S130, mixing the first dispersion solution and the second dispersion solution to obtain the solid precipitate.

In some embodiments, the steps S110 and S120 are not carried out in a particular order, the step S110 may be carried out before the step S120, or the step S120 may be carried out before the step S110, or the step S110 and the step S120 may be carried out simultaneously.

In some embodiments, the ferrocyanide source and the first sodium source may be dispersed in the first dispersing agent by stirring. A stirring time may be controlled from 5 min to 30 min, for example, may be 6 min, 10 min, 15 min, 20 min, 25 min, or any time value between 5 min and 30 min.

In some embodiments, the ferrocyanide source and the first sodium source are derived from sodium ferrocyanide, and that is to say, the sodium ferrocyanide provides ferrocyanide ions and sodium ions simultaneously.

In some embodiments, the sodium ferrocyanide may be Na₄Fe(CN)₆·10H₂O.

In some embodiments, a concentration of the sodium ferrocyanide in the first dispersing agent may be 5 g/L to 50 g/L, for example, may be 8 g/L, 10 g/L, 15 g/L, 20 g/L, 25 g/L, 30 g/L, 35 g/L, 40 g/L, 45 g/L, or any concentration value between 5 g/L and 50 g/L.

In some embodiments, the first dispersing agent includes: deionized water and a first solvent, where the ferrocyanide source is insoluble in the first solvent. When the ferrocyanide source is derived from the sodium ferrocyanide, the first solvent is selected from a solvent insoluble for the sodium ferrocyanide. By using the solvent insoluble for the sodium ferrocyanide, the ferrocyanide source has differences in solubility in a mixed solvent, and a reaction system has two phases including a solid phase and a liquid phase. In addition, by using an organic solvent as the first solvent, the reaction rate is slowed down, and convenience is provided for controlling the generation rate of the Prussian blue compound, reducing defects of the generated Prussian blue compound and increasing the yield of the Prussian blue compound.

In some embodiments, the first solvent is selected from one or more of ethylene glycol, N,N-dimethylformamide, ethanol, and glycerol.

In some embodiments, a volume ratio of the deionized water and the first solvent in the first dispersing agent is selected from 1:(0.01-100), for example, the volume ratio of the deionized water and the first solvent in the first dispersing agent may be 1:0.05, 1:0.1, 1:0.2, 1:0.5, 1:1, 1:5, 1:10, 1:20, 1:50, 1:80, 1:90, or any ratio between 1:0.01 and 1:100.

In some embodiments, the deionized water and the first solvent in the first dispersing agent may be evenly mixed by stirring so as to obtain the first dispersing agent. A stirring time after the deionized water and the first solvent in the first dispersing agent are mixed may be controlled from 1 min to 100 min, for example, may be 2 min, 5 min, 10 min, 15 min, 20 min, 30 min, 45 min, 60 min, 70 min, 80 min, 90 min, or any time value between 1 min and 100 min.

In some embodiments, the first dispersion solution further includes a carbonaceous material. The carbonaceous material is selected from a conductive carbon black material, for example, may be Ketjen black. The conductive carbon black material is a common conductive carbonaceous material, which is conducive to inhibiting the generation of defects and improving the electrical conductivity of the Prussian blue cathode material in a production process of the Prussian blue compound, and is conducive to reducing the cost. When the first dispersion solution further includes the carbonaceous material, the step S110 includes:
S111, dispersing the carbonaceous material in the first dispersing agent; and
S112, dispersing the ferrocyanide source and the first sodium source in the first dispersing agent.

In some embodiments, when the first dispersion solution includes the carboniferous material, the first solvent is preferably ethylene glycol, which is conducive to evenly dispersing the carboniferous material in the first dispersing agent.

In some embodiments, when the first dispersion solution includes the carbonaceous material, a concentration of the carbonaceous material is 0.1 g/L to 10 g/L, for example, 0.2 g/L, 0.5 g/L, 1 g/L, 2 g/L, 5 g/L, 6 g/L, 8 g/L, 9 g/L, or any concentration value between 0.1 g/L and 10 g/L.

In some embodiments, the carbonaceous material may be evenly dispersed in the first dispersing agent by ultrasonic dispersion. An ultrasonic dispersion time may be 5 min to 30 min, for example, may be 6 min, 10 min, 15 min, 20 min, 25 min, or any time value between 5 min and 30 min.

In some embodiments, a molar ratio of the carbonaceous material and the ferrocyanide source is selected from 1:(0.01-100), for example, the molar ratio of the carbonaceous material and the ferrocyanide source may be 1:0.02, 1:0.05, 1:0.08, 1:0.1, 1:0.5, 1:0.8, 1:1, 1:2, 1:5, 1:10, 1:20, 1:50, 1:60, 1:80, or any ratio between 1:0.01 and 1:100.

In some embodiments, the bivalent iron source and the complexing agent may be dispersed in the second dispersing agent by stirring. A stirring time may be controlled from 5 min to 30 min, for example, may be 6 min, 10 min, 15 min, 20 min, 25 min, or any time value between 5 min and 30 min.

In some embodiments, the bivalent iron source is derived from a bivalent iron salt, and the bivalent iron salt is selected from one or more of FeSO₄·7H₂O, Fe(NO₃)₂, and FeCl₂·4H₂O.

In some embodiments, the complexing agent is selected from one or more of anhydrous sodium citrate, sodium citrate dihydrate, sodium citrate pentahydrate, sodium oxalate, sodium tartrate, and sodium malate. The complexing agent and ferrous ions provided by the bivalent iron source achieve a strong complexation effect, and when the complexing agent is selected from the above compounds, the complexing agent can be simultaneously used as a second sodium source to effectively improve the concentration of sodium ions in a mixed solution of the first dispersion solution and the second dispersion solution, which is conducive to controlling the generation rate of the Prussian blue compound, effectively improving the content of sodium ions in the Prussian blue compound, reducing the defects of the Prussian blue compound, increasing the yield of the Prussian blue compound and improving the performance of the Prussian blue cathode material, and is conducive to improving the cycle stability, specific capacity, coulomb efficiency, rate performance and other properties of a sodium-ion battery to which the Prussian blue cathode material prepared is applied.

In some embodiments, a molar ratio of the bivalent iron source and the complexing agent is selected from 1:(1-100), for example, the molar ratio of the bivalent iron source and the complexing agent may be 1:2, 1:4, 1:5, 1:10, 1:20, 1:50, 1:60, 1:80, 1:90, or any ratio between 1:1 and 1:100.

In some embodiments, a molar ratio of the ferrocyanide source and the bivalent iron source is selected from 1:(1-3), for example, the molar ratio of the ferrocyanidie source and the bivalent iron source may be 1:1.5, 1:1.8, 1:2, 1:2.2, 1:2.5, 1:2.8, or any ratio between 1:1 and 1:3.

In some embodiments, the second dispersing agent includes: deionized water and a second solvent, where the ferrocyanide source is insoluble in the second solvent. When the ferrocyanide source is derived from the sodium ferrocyanide, the second solvent is selected from a solvent insoluble for the sodium ferrocyanide. By using the solvent insoluble for the sodium ferrocyanide, the ferrocyanide source has differences in solubility in a mixed solvent of the first dispersion solution and the second dispersion solution, and a reaction system has two phases including a solid phase and a liquid phase. In addition, by using an organic solvent as the second solvent, the reaction rate is slowed down, and convenience is provided for controlling the generation rate of the Prussian blue compound, reducing defects of the generated Prussian blue compound and increasing the yield of the Prussian blue compound.

In some embodiments, the second solvent is selected from one or more of ethylene glycol, N,N-dimethylformamide, ethanol, and glycerol.

In some embodiments, a volume ratio of the deionized water and the second solvent in the second dispersing agent is selected from 1:(0.01-100), for example, the volume ratio of the deionized water and the second solvent in the second dispersing agent may be 1:0.05, 1:0.1, 1:0.2, 1:0.5, 1:1, 1:5, 1:10, 1:20, 1:50, 1:80, 1:90, or any ratio between 1:0.01 and 1:100.

In some embodiments, the first solvent is the same as the second solvent, which is conducive to reducing the variety of solvents used in a preparation process and reducing the preparation cost.

In some embodiments, the step S130 includes:
S131, mixing the first dispersion solution and the second dispersion solution to obtain a mixture; and
S132, subjecting the mixture to stirring at a first reaction temperature for a first stirring time, followed by standing for a first standing time to obtain the solid precipitate.

In some embodiments, the first dispersion solution and the second dispersion solution may be mixed by dropping. For example, the first dispersion solution may be dropped into the second dispersion solution for mixing, and alternatively, the second dispersion solution may be dropped into the first dispersion solution for mixing. The dropping may be carried out by a constant pressure funnel or a peristaltic pump. A dropping rate may be 1 mL/min to 100 mL/min, for example, may be 2 mL/min, 5 mL/min, 10 mL/min, 15 mL/min, 20 mL/min, 50 mL/min, 60 mL/min, 75 mL/min, 80 mL/min, 90 mL/min, or any dropping rate value between 1 mL/min and 100 mL/min.

In some embodiments, a volume ratio of the first dispersion solution and the second dispersion solution is 1:(0.1-10), for example, may be 1:0.1, 1:0.2, 1:0.5, 1:1, 1:3, 1:5, 1:6, 1:9, or any ratio between 1:0.1 and 1:10.

In some embodiments, the first reaction temperature may be 5°C to 100°C, for example, may be 10 °C, 15 °C, 20 °C, 25 °C, 40 °C, 50 °C, 60 °C, 70 °C, 80 °C, 90 °C, or any temperature value between 5 °C and 100 °C.

In some embodiments, the first stirring time may be 12 h to 72 h, for example, may be 18 h, 24 h, 36 h, 40 h, 48 h, 56 h, 60 h, 64 h, or any time value between 12 h and 72 h. Within the first stirring time, the mixture may be stirred to carry out a sufficient reaction. A stirring rate of the mixture may be 100 rpm to 1,500 rpm, for example, may be 200 rpm, 300 rpm, 500 rpm, 600 rpm, 800 rpm, 1,000 rpm, 1,200 rpm, 1,300 rpm, 1,400 rpm, or any stirring rate between 100 rpm and 1,500 rpm.

In some embodiments, the first standing time may be 12 h to 36 h, for example, may be 16 h, 20 h, 24 h, 28 h, 32 h, or any time value between 12 h and 36 h.

In some embodiments, the solid precipitate may be separated and obtained by a common solid-liquid separation method, such as suction filtration, filtration and other methods.

In some embodiments, the step S200 includes:
S210, washing the solid precipitate with a first detergent to obtain a product to be dried; and
S220, subjecting the product to be dried to drying treatment to obtain the Prussian blue cathode material.

In some embodiments, the first detergent may be selected from deionized water and/or anhydrous ethanol. The solid precipitate may be washed with the first detergent for one time or several times (for example, may be two times, three times, etc.) to obtain the product to be dried. When the first detergent is selected from the deionized water and the anhydrous ethanol, the solid precipitate is washed with the deionized water and the anhydrous ethanol, respectively.

In some embodiments, the drying treatment may be carried out by a commonly used drying method, for example, vacuum drying. In some embodiments, the vacuum drying may be carried out at temperature of 60 °C to 120 °C, for example, may be 65 °C, 70 °C, 75 °C, 80 °C, 85 °C, 90 °C, 95 °C, 98 °C, 100 °C, 102 °C, 105 °C, 108 °C, or any temperature value between 90°C and 110°C; and a vacuum drying time is greater than 2 h, and further, the vacuum drying time may be 12 h to 36 h, for example, may be 16 h, 20 h, 24 h, 28 h, 32 h, or any time value between 12 h and 36 h.

In some embodiments, when the first dispersion solution includes a carbonaceous material, the carbonaceous material is at least partially attached to surfaces of the crystals of the Prussian blue compound. That is to say, the Prussian blue cathode material includes the Prussian blue compound and the carbonaceous material that is at least partially attached to surfaces of the crystals of the Prussian blue compound.

According to the preparation method for a Prussian blue cathode material provided in an embodiment of the present disclosure, a Prussian blue compound is co-precipitated by mixing the ferrocyanide source, the first sodium source and the bivalent iron source, so as to obtain a Prussian blue cathode material, where the complexing agent and ferrous ions provided by the bivalent iron source achieve a strong complexation effect, which is conducive to controlling the generation rate of the Prussian blue compound, reducing defects of the Prussian blue compound, increasing the yield of the Prussian blue compound and improving the performance of the Prussian blue cathode material, and is conducive to improving the cycle stability, specific capacity, coulomb efficiency, rate performance and other properties of a sodium-ion battery to which the Prussian Blue cathode material prepared is applied.

An embodiment of the present disclosure further provides a cathode sheet. The cathode sheet includes the Prussian blue cathode material as described above; and alternatively, the cathode sheet includes a Prussian blue cathode material obtained by the preparation method for a Prussian blue cathode material as described above.

The cathode sheet provided in an embodiment of the present disclosure, by including the Prussian blue cathode material as described above or including a Prussian blue cathode material obtained by the preparation method for a Prussian blue cathode material as described above, is conducive to improving the performance of a sodium-ion battery in terms of specific capacity, coulomb efficiency, rate performance and long cycle stability when applied to the sodium-ion battery.

An embodiment of the present disclosure further provides a sodium-ion battery, including the Prussian blue cathode material as described above, or a Prussian blue cathode material obtained by the preparation method for a Prussian blue cathode material as described above, or the cathode sheet as described above.

The sodium-ion battery provided in an embodiment of the present disclosure, by including the Prussian blue cathode material as described above or including a Prussian blue cathode material obtained by the preparation method for a Prussian blue cathode material as described above or the cathode sheet as described above, is improved in performance in terms of specific capacity, coulomb efficiency, rate performance and long cycle stability, etc.

In some embodiments, the sodium-ion battery includes: a cathode sheet, an anode electrode plate, a diaphragm, and an electrolyte.

In some embodiments, a preparation method for the cathode sheet may include:
mixing a Prussian blue cathode material, a binder, a conductive agent and a solvent to obtain a slurry; and
coating the slurry on aluminum foil, and carrying out drying to obtain the cathode sheet.

In some embodiments, the cathode material is the Prussian blue cathode material as described above; the binder may be selected from polyvinylidene fluoride (PVDF); the conductive agent may be selected from Super P (conductive carbon black); a molar ratio of the cathode material, the binder and the conductive agent may be selected from (6-8):(1-3):(0.5-1.5), may also be selected from (6.5-7.5):(1.5-2.5):(0.8-1.2), and may further be selected from 7:2:1; and the solvent is selected from dimethylpyrrolidone.

In some embodiments, the anode electrode may be selected from metallic sodium; the diaphragm may be selected from a glass fiber membrane; and the electrolyte may be selected from 1.0 mol/L NaClO₄/EC (ethylene carbonate)+PC (polycarbonate)+FEC (fluoroacetate) (a volume ratio of the EC, the PC and the FEC is 0.45:0.45:0.05).

In some embodiments, the cathode electrode, the anode electrode, the diaphragm and the electrolyte can be assembled into a CR2032 button battery in a glove box.

Some specific embodiments are listed below. It should be noted that the embodiments described below are illustrative, which are intended only to explain the present disclosure and shall not be understood as limitations of the present disclosure. Products that do not have specific technologies or conditions in their embodiments are used according to the technologies or conditions described in documents within the field or specifications of the products. Reagents or instruments used without specific manufacturers are conventional products available on the market.

### Embodiment 1

100 mg of Ketjen black was weighed, added to 100 mL of a mixed solution of deionized water and ethylene glycol (a volume ratio of the deionized water and the ethylene glycol was 3:1) and subjected to ultrasonic stirring for 5 min-30 min to obtain an evenly dispersed dispersion solution, and then 0.968 g of sodium ferrocyanide (Na₄Fe(CN)₆·10H₂O) was weighed, added to the dispersion solution and stirred for 5min-30 min to obtain a 9.68 g/L sodium ferrocyanide dispersion solution. In addition, 5 g of anhydrous sodium citrate and 0.834 g of ferrous sulfate (FeSO₄·7H₂O) were weighed, dissolved in 100 mL of a mixed solution of deionized water and ethylene glycol (a volume ratio of the deionized water and the ethylene glycol was 3:1) and stirred for dissolution to obtain a transparent mixed metal salt solution.

The mixed metal salt solution obtained above was slowly dropped into the sodium ferrocyanide dispersion solution through a constant pressure funnel at 25 °C at a dropping rate of 3.33 mL/min. After the dropping was completed, stirring was carried out at 500 rpm at 25 °C for 4 h, and then standing was carried out for 24 h. After the standing was completed, suction filtration was carried out to obtain a blue Prussian blue precipitate.

The Prussian blue precipitate obtained was washed alternately with water and ethanol, where washing with the water was carried out for two times, and washing with the ethanol was carried out for one time until impurities were removed. Then, the Prussian blue precipitate was subjected to vacuum drying at 100 °C for 24 h to obtain a Prussian blue cathode material for a sodium-ion battery, where a chemical formula of a Prussian blue compound was Na_{0.647}Fe[Fe(CN)₆]_{0.93}□_{0.07}·2.6H₂O (the molecular formula was determined by XRD detection), and that is to say, the chemical formula of the Prussian blue compound was Na_{0.647}Fe[Fe(CN)₆]_{0.93}·2.6H₂O.

### Embodiment 2

200 mg of Ketjen black was weighed, added to 100 mL of a mixed solution of deionized water and ethylene glycol (a volume ratio of the deionized water and the ethylene glycol was 2:1) and subjected to ultrasonic stirring for 5min-30 min to obtain an evenly dispersed dispersion solution, and then 0.968 g of sodium ferrocyanide (Na₄Fe(CN)₆·10H₂O) was weighed, added to the dispersion solution and stirred for 5min-30 min to obtain a 9.68 g/L sodium ferrocyanide dispersion solution. In addition, 5 g of anhydrous sodium citrate and 0.834 g of ferrous sulfate (FeSO₄·7H₂O) were weighed, dissolved in 100 mL of a mixed solution of deionized water and ethylene glycol (a volume ratio of the deionized water and the ethylene glycol was 2:1) and stirred for dissolution to obtain a transparent mixed metal salt solution.

The mixed metal salt solution obtained above was slowly dropped into the sodium ferrocyanide dispersion solution through a constant pressure funnel at 25 °C at a dropping rate of 3.33 mL/min. After the dropping was completed, stirring was carried out at 500 rpm at 25 °C for 4 h, and then standing was carried out for 24 h. After the standing was completed, suction filtration was carried out to obtain a blue Prussian blue precipitate.

The Prussian blue precipitate obtained above was washed alternately with water and ethanol, where washing with the water was carried out for two times, and washing with the ethanol was carried out for one time until impurities were removed. Then, the Prussian blue precipitate was subjected to vacuum drying at 100 °C for 24 h to obtain a Prussian blue cathode material for a sodium-ion battery, where a chemical formula of a Prussian blue compound was Na_{0.647}Fe[Fe(CN)₆]_{0.93}□_{0.07}-2.6H₂O, and that is to say, the chemical formula of the Prussian blue compound was Na_{0.647}Fe[Fe(CN)₆]_{0.93}·2.6H₂O.

### Embodiment 3

0.968 g of sodium ferrocyanide (Na₄Fe(CN)₆·10H₂O) was weighed, added to 100 mL of a mixed solution of deionized water and ethylene glycol (a volume ratio of the deionized water and the ethylene glycol was 1:1) and stirred for 5min-30 min to obtain a 9.68 g/L sodium ferrocyanide dispersion solution. In addition, 5 g of anhydrous sodium citrate and 0.834 g of ferrous sulfate (FeSO₄·7H₂O) were weighed, dissolved in 100 mL of a mixed solution of deionized water and ethylene glycol (a volume ratio of the deionized water and the ethylene glycol was 1:1) and stirred for dissolution to obtain a transparent mixed metal salt solution.

The mixed metal salt solution obtained above was slowly dropped into the sodium ferrocyanide dispersion solution through a constant pressure funnel at 25 °C at a dropping rate of 3.33 mL/min. After the dropping was completed, stirring was carried out at 500 rpm at 25 °C for 4 h, and then standing was carried out for 24 h. After the standing was completed, suction filtration was carried out to obtain a blue Prussian blue precipitate.

The Prussian blue precipitate obtained above was washed alternately with water and ethanol, where washing with the water was carried out for two times, and washing with the ethanol was carried out for one time until impurities were removed. Then, the Prussian blue precipitate was subjected to vacuum drying at 100 °C for 24 h to obtain a Prussian blue cathode material for a sodium-ion battery, where a chemical formula of a Prussian blue compound was Na_{0.517}Fe[Fe(CN)₆]_{0.85}□_{0.15}·3.15H₂O, and that is to say, the chemical formula of the Prussian blue compound was Na_{0.517}Fe[Fe(CN)₆]_{0.85}·3.15H₂O.

### Comparative Embodiment 1

100 mg of Ketjen black was weighed, added to 100 mL of deionized water and subjected to ultrasonic stirring for 5min-30 min to obtain an evenly dispersed dispersion solution, and then 0.968 g of sodium ferrocyanide (Na₄Fe(CN)₆·10H₂O) was weighed, added to the dispersion solution and stirred for 5min-30 min to obtain a 9.68 g/L sodium ferrocyanide dispersion solution. In addition, 5 g of anhydrous sodium citrate and 0.834 g of ferrous sulfate (FeSO₄·7H₂O) were weighed, dissolved in 100 mL of deionized water and stirred for dissolution to obtain a transparent mixed metal salt solution.

The mixed metal salt solution obtained above was slowly dropped into the sodium ferrocyanide dispersion solution through a constant pressure funnel at 25 °C at a dropping rate of 3.33 mL/min. After the dropping was completed, stirring was carried out at 500 rpm at 25 °C for 4 h, and then standing was carried out for 24 h. After the standing was completed, suction filtration was carried out to obtain a blue Prussian blue precipitate.

The Prussian blue precipitate obtained above was washed alternately with water and ethanol, where washing with the water was carried out for two times, and washing with the ethanol was carried out for one time until impurities were removed. Then, the Prussian blue precipitate was subjected to vacuum drying at 100 °C for 24 h to obtain a Prussian blue cathode material for a sodium-ion battery.

### Comparative Embodiment 2

200 mg of Ketjen black was weighed, added to 100 mL of deionized water and subjected to ultrasonic stirring for 5min-30 min to obtain an evenly dispersed dispersion solution, and then 0.968 g of sodium ferrocyanide (Na₄Fe(CN)₆·10H₂O) was weighed, added to the dispersion solution and stirred for 5min-30 min to obtain a 9.68 g/L sodium ferrocyanide dispersion solution. In addition, 5 g of anhydrous sodium citrate and 0.834 g of ferrous sulfate (FeSO₄·7H₂O) were weighed, dissolved in 100 mL of deionized water and stirred for dissolution to obtain a transparent mixed metal salt solution.

The mixed metal salt solution obtained above was slowly dropped into the sodium ferrocyanide dispersion solution through a constant pressure funnel at 25 °C at a dropping rate of 3.33 mL/min. After the dropping was completed, stirring was carried out at 500 rpm at 25 °C for 4 h, and then standing was carried out for 24 h. After the standing was completed, suction filtration was carried out to obtain a blue Prussian blue precipitate.

The Prussian blue precipitate obtained above was washed alternately with water and ethanol, where washing with the water was carried out for two times, and washing with the ethanol was carried out for one time until impurities were removed. Then, the Prussian blue precipitate was subjected to vacuum drying at 100 °C for 24 h to obtain a Prussian blue cathode material for a sodium-ion battery.

### Performance test

### (1) X-ray diffractometer (XRD) test:

A D8 Focus X-ray powder diffractometer of Bruker in Germany was used for testing with Cu-Kα as a radiation source at a wavelength of 1.5046 λ. A Ni filter was adopted, a tube flow was 40 mA, a tube pressure was 40 KV, a scanning range was 5° to 90°, a scanning speed was 5°/min, and a step size was 0.05°. The cathode materials prepared in embodiments and comparative embodiments were placed on a slide and pressed, and the slide was embedded in the middle of an experimental tank of an instrument for testing. Phase identification and crystal structure information were analyzed by JADE 6.0 software.

### (2) Characterization by a scanning electron microscope:

An SU-3500 scanning electron microscope tester produced by HITACHI was used to observe the morphology of the materials at an accelerating voltage of 15 KV.

Test results are as follows.

Part (a) in Fig. 1 is an X-ray diffraction diagram of the sphere-like Prussian blue cathode material for a sodium-ion battery prepared in Embodiment 1, where the X-axis represents an X-ray scanning angle 2θ, and the ordinate represents an X-ray intensity. As can be seen from Fig. 1, the Prussian blue cathode material has a characteristic peak on a crystal face (200) at a scanning angle of 16.92°, a characteristic peak on a crystal face (220) at a scanning angle of 24.12°, a characteristic peak on a crystal face (400) at a scanning angle of 34.18°, a characteristic peak on a crystal face (420) at a scanning angle of 38.56°, a characteristic peak on a crystal face (422) at a scanning angle of 42.46°, a characteristic peak on a crystal face (440) at a scanning angle of 49.39°, a characteristic peak on a crystal face (600) at a scanning angle of 52.78° and a characteristic peak on a crystal face (620) at a scanning angle of 55.77°, belongs to an Fm-3m space group and has no impurity peaks in the X-ray diffraction diagram, indicating that the cathode material is a pure-phase substance.

Part (b) in Fig. 1 is a scanning electron microscope image of the Prussian blue cathode material for a sodium-ion battery prepared in Embodiment 1. As can be observed, the Prussian blue cathode material has a cubic structure composed of nanoscale cubic crystal particles with a nanocubic size of about 2 µm.

Part (a) in Fig. 2 is an X-ray diffraction diagram of the Prussian blue cathode material for a sodium-ion battery prepared in Embodiment 2, where the X-axis represents an X-ray scanning angle 2θ, and the ordinate represents an X-ray intensity. As can be seen, the Prussian blue cathode material has a characteristic peak on a crystal face (200) at a scanning angle of 16.88°, a characteristic peak on a crystal face (220) at a scanning angle of 24.06°, a characteristic peak on a crystal face (400) at a scanning angle of 34.1°, a characteristic peak on a crystal face (420) at a scanning angle of 38.42°, a characteristic peak on a crystal face (422) at a scanning angle of 42.38°, a characteristic peak on a crystal face (440) at a scanning angle of 49.4°, a characteristic peak on a crystal face (600) at a scanning angle of 52.62° and a characteristic peak on a crystal face (620) at a scanning angle of 55.67°, belongs to an Fm-3m space group and has no impurity peaks in the X-ray diffraction diagram, indicating that the cathode material is a pure-phase substance.

Part (b) in Fig. 2 is a scanning electron microscope image of the Prussian blue cathode material for a sodium-ion battery prepared in Embodiment 2. As can be observed, the Prussian blue material has a porous hierarchical sphere-like structure composed of nanocubes with a nanocubic size of about 100 nm and a hierarchical sphere-like size of about 2 µm, and has good dispersibility.

Part (a) in Fig. 3 is an X-ray diffraction diagram of the Prussian blue cathode material for a sodium-ion battery prepared in Embodiment 3, where the X-axis represents an X-ray scanning angle 2θ, and the ordinate represents an X-ray intensity. As can be seen, the Prussian blue cathode material has a characteristic peak on a crystal face (200) at a scanning angle of 17.48°, a characteristic peak on a crystal face (220) at a scanning angle of 24.84°, a characteristic peak on a crystal face (400) at a scanning angle of 34.44°, a characteristic peak on a crystal face (420) at a scanning angle of 38.53°, a characteristic peak on a crystal face (422) at a scanning angle of 42.03°, a characteristic peak on a crystal face (440) at a scanning angle of 49.61°, a characteristic peak on a crystal face (600) at a scanning angle of 50.94° and a characteristic peak on a crystal face (620) at a scanning angle of 55.67°, belongs to an Fm-3m space group and has no impurity peaks in the X-ray diffraction diagram, indicating that the cathode material is a pure-phase substance.

Part (b) in Fig. 3 is a scanning electron microscope image of the Prussian blue cathode material for a sodium-ion battery prepared in Embodiment 3. As can be observed, the Prussian blue material has a structure composed of nanocubic particles, but some of the nanocubic particles are broken, and the nanocubic particles have a size of 500 nm.

Part (a) in Fig. 4 is an X-ray diffraction diagram of the cubic Prussian blue cathode material for a sodium-ion battery prepared in Comparative Embodiment 1, where the X-axis represents an X-ray scanning angle 2θ, and the ordinate represents an X-ray intensity. As can be seen, the Prussian blue cathode material has a characteristic peak on a crystal face (200) at a scanning angle of 16.94°, a characteristic peak on a crystal face (220) at a scanning angle of 24.08°, a characteristic peak on a crystal face (400) at a scanning angle of 34.34°, a characteristic peak on a crystal face (420) at a scanning angle of 38.56°, a characteristic peak on a crystal face (422) at a scanning angle of 42.38°, a characteristic peak on a crystal face (440) at a scanning angle of 49.4°, a characteristic peak on a crystal face (600) at a scanning angle of 52.36° and a characteristic peak on a crystal face (620) at a scanning angle of 55.67°, belongs to an Fm-3m space group and has no impurity peaks in the X-ray diffraction diagram, indicating that the cathode material is a pure-phase substance.

Part (b) in Fig. 4 is a scanning electron microscope image of the cubic Prussian blue cathode material for a sodium-ion battery prepared in Comparative Embodiment 1. As can be observed, the Prussian blue material has cubic morphology formed by aggregation of nanoparticles, where the nanoparticles have a size of about 1 µm.

Part (a) in Fig. 5 is an X-ray diffraction diagram of the Prussian blue cathode material for a sodium-ion battery prepared in Comparative Embodiment 2, where the X-axis represents an X-ray scanning angle 2θ, and the ordinate represents an X-ray intensity. As can be seen, the Prussian blue cathode material has a characteristic peak on a crystal face (200) at a scanning angle of 16.82°, a characteristic peak on a crystal face (220) at a scanning angle of 23.96°, a characteristic peak on a crystal face (400) at a scanning angle of 34.1°, a characteristic peak on a crystal face (420) at a scanning angle of 38.35°, a characteristic peak on a crystal face (422) at a scanning angle of 42.19°, a characteristic peak on a crystal face (440) at a scanning angle of 49.17°, a characteristic peak on a crystal face (600) at a scanning angle of 52.26° and a characteristic peak on a crystal face (620) at a scanning angle of 55.42°, belongs to an Fm-3m space group and has no impurity peaks in the X-ray diffraction diagram, indicating that the cathode material is a pure-phase substance.

Part (b) in Fig. 5 is a scanning electron microscope image of the Prussian blue cathode material for a sodium-ion battery prepared in Comparative Embodiment 2. As can be observed, the Prussian blue material has a cubic structure composed of nanocubic particles, and the nanocubic particles have a size of about 1 µm.

As can be seen from the XRD diffraction results in embodiments and comparative embodiments, the Prussian blue materials prepared in embodiments have higher diffraction peak intensity than that in comparative embodiments, and the materials prepared in embodiments have higher crystal crystallinity and better quality.

Meanwhile, small particles attached to the surface of the Prussian blue compound as shown in Part (b) in Fig. 1 and Part (b) in Fig 2 indicate that the Ketjen black added in Embodiment 1 and Embodiment 2 is at least partially attached to the surface of the Prussian blue compound in the prepared Prussian blue cathode material.

With the Prussian blue cathode materials for a sodium-ion battery prepared in embodiments and comparative embodiments respectively as an active cathode material for the sodium-ion battery, the active cathode material was mixed with a binder (polyvinylidene fluoride, PVDF) and a conductive agent (Super P) at a mass ratio of 7:2:1, and dimethylpyrrolidone (NMP) was added as a solvent and then mixed and stirred to form a uniform slurry. The slurry was evenly coated on aluminum foil, dried and cut into a thin sheet to serve as a cathode electrode, metallic sodium was used as an anode electrode, a glass fiber membrane was used as a diaphragm, 1.0 mol/L NaClO₄/EC (ethylene carbonate)+PC (polycarbonate)+FEC (fluoroacetate) (EC:PC:FEC=0.45:0.45:0.05, vol) was used as an electrolyte, and a CR2032 button battery was assembled in an argon glove box.

A Land battery tester produced by Wuhan Jinnuo Electronics Co., Ltd. was used to test the button battery assembled above. Test conditions and results are as follows: a constant current charge-discharge test was carried out on the button battery in a charge-discharge voltage range of 2 V to 4.2 V; in Embodiments 1-3, the Prussian blue electrode prepared from the cathode material in Embodiment 2 has best electrochemical performance, at a current density of 100 mA/g, the battery has initial charge specific capacities of 113.3 mAh/g and initial discharge specific capacities of 137 mAh/g, respectively, and a discharge specific capacity retention rate is 87.1% after 200 cycles, while the capacity in Comparative Embodiment 1 and Comparative Embodiment 2 is only 42% and 30% after 200 cycles. In addition, the Prussian blue electrode prepared from the cathode material in Embodiment 2 still has a discharge specific capacity retention rate of 77% after 800 cycles and a coulomb efficiency close to 99% after each cycle. Test results are as follows (as shown in Table 1 and Fig. 6 to Fig. 10).

**Table 1**

| | Current density | | | |
|---|---|---|---|---|
| | 100mA·g⁻¹ | | | |
| | Initial specific capacity (mAh·g⁻¹) | Specific capacity after 200 cycles (mAh·g⁻¹) | Specific capacity after 800 cycles (mAh·g⁻¹) | Coulomb efficiency (%) |
| Embodiment 1 | 118.5 | 100.7 | 84.2 | 98.3 |
| Embodiment 2 | 137 | 119.3 | 106.2 | 99.5 |
| Embodiment 3 | 122.7 | 103.1 | 104.3 | 99.2 |
| Comparative Embodiment 1 | 110.7 | 46.5 | | 98.1 |
| Comparative Embodiment 2 | 116.2 | 34.8 | | 98.6 |

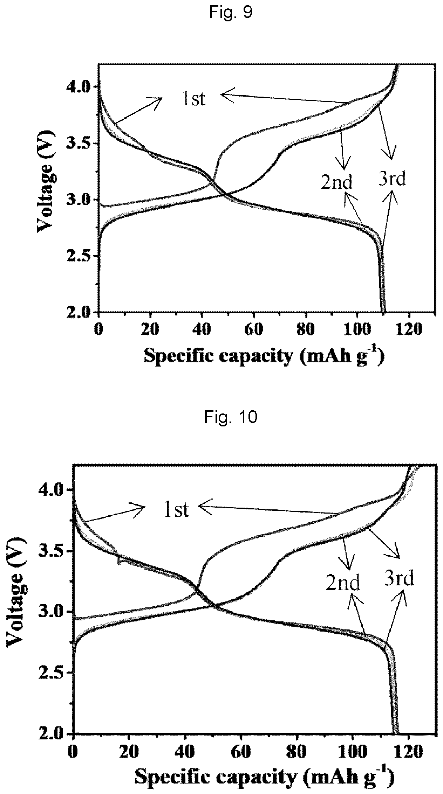

Fig. 6 is a schematic diagram showing discharge specific capacity results of the Prussian blue cathode material prepared in Embodiment 1 after charge and discharge for 1 cycle to 3 cycles; Part (a) in Fig. 7 to Part (c) in Fig. 7 are schematic diagrams showing charge and discharge performance of the Prussian blue cathode material prepared in Embodiment 2, Part (a) in Fig. 7 is a schematic diagram showing charge and discharge specific capacity results of the Prussian blue cathode material prepared in Embodiment 2 after 1 cycle to 5 cycles, and Part (b) in Fig. 7 and Part (c) in Fig. 7 are schematic diagrams showing rate performance and cycle performance results of the Prussian blue cathode material prepared in Embodiment 2, respectively; Fig. 8 is a schematic diagram showing discharge specific capacity results of the Prussian blue cathode material prepared in Embodiment 3 after charge and discharge for 1 cycle to 4 cycles; Fig. 9 is a schematic diagram showing discharge specific capacity results of the cathode material prepared in Comparative Embodiment 1 after charge and discharge for 1 cycle to 3 cycles; and Fig. 10 is a schematic diagram showing discharge specific capacity results of the cathode material prepared in Comparative Embodiment 2 after charge and discharge for 1 cycle to 3 cycles.

As can be seen by combining the results in Fig. 6 to Fig. 10 and Table 1, when the Prussian blue cathode materials obtained in embodiments of the present disclosure are applied to a sodium-ion battery, the sodium-ion battery has more excellent performance in terms of cycle stability, charge and discharge specific capacities, coulomb efficiency, rate performance, etc.

In the present disclosure, it is observed through a scanning electron microscope that the Prussian blue and the Ketjen black are evenly distributed, and the sodium ferrocyanide can be dissolved in the ethylene glycol solution. When an organic solvent is introduced in a reaction system, a mixed phase will be formed, because the ferrous sulfate and the sodium citrate are insoluble in the organic solvent, but a reaction needs to be carried out with the participation of water. Therefore, introduction of the organic solvent can further control the reaction rate so as to control a growth process of Prussian blue crystals, such that aged Prussian blue has fewer defects. Addition of the Ketjen black can solve the problem of poor electrical conductivity of the Prussian blue. When the Ketjen black is introduced, the electrical conductivity of a composite material of Prussian blue and Ketjen black can be greatly improved. In the present disclosure, the organic solvent, ethylene glycol, is introduced so achieve two phases in the reaction system and to further increase the concentration of sodium ions in the reaction system in the aqueous phase. The organic solution introduced in the present disclosure does not participate in a reaction, but is only used to achieve the purpose of controlling the reaction rate. In the present disclosure, closed-loop recycling may be completely achieved without waste after the reaction is completed, and a recycling method may include reduced pressure distillation at 80°C, which is green and safe.

Although the present disclosure has been described and explained with reference to specific embodiments of the present disclosure, these descriptions and explanations are not intended to limit the present disclosure. It can be clearly understood by persons skilled in the field that, without deviating from the true spirit and scope of the present disclosure as defined by the attached claims, various changes can be made to make particular situations, materials, substance composition, substances, methods or processes appropriate to the purpose, spirit and scope of the present application. All such modifications are intended to fall within the scope of the attached claims herein. Although the method disclosed herein has been described with reference to specific operations performed in a specific order, it should be understood that these operations may be combined, subdivided, or reordered to form equivalent methods without deviating from the instruction of the present disclosure. Therefore, unless specifically indicated herein, operation orders and groups are not limitations of the present application.

## Claims

1. A Prussian blue cathode material, wherein the Prussian blue cathode material comprises a Prussian blue compound, the Prussian blue compound has a general chemical formula:
NaₓFe[Fe(CN)₆]_{y}·nH₂O Formula I,
in Formula I, x is 0.01-3, 0<y<1, and
n is 0.01-3.5.

2. The Prussian blue cathode material according to claim 1, wherein 0.5<x<1.5, and 0.8<y<1.

3. The Prussian blue cathode material according to claim 2, wherein 0.5<x<1.

4. The Prussian blue cathode material according to any one of claims 1-3, wherein at least some of crystals of the Prussian blue compound are in a cube-like shape.

5. The Prussian blue cathode material according to claim 1, wherein a size of the crystals of the Prussian blue compound is equal to greater than 0.1 µm, and the size of the crystals of the Prussian blue compound is equal to less than 2.5 µm.

6. The Prussian blue cathode material according to claim 1, wherein the chemical formula of the Prussian blue compound is selected from at least one of Na_{0.647}Fe[Fe(CN)₆]_{0.93}·2.6H₂O and Na_{0.517}Fe[Fe(CN)₆]_{0.85}·3.15H₂O.

7. The Prussian blue cathode material according to claim 1, wherein the Prussian blue cathode material further comprises a carbonaceous material, and the carbonaceous material is at least partially attached to surfaces of the crystals of the Prussian blue compound.

8. The Prussian blue cathode material according to claim 7, wherein the carbonaceous material is selected from a conductive carbon black material.

9. A preparation method for a Prussian blue cathode material, comprising:
mixing a first dispersion solution and a second dispersion solution to obtain a solid precipitate; and
subjecting the solid precipitate to washing and drying to obtain a Prussian blue cathode material;
wherein, the first dispersion solution comprises: a ferrocyanide source, a first sodium source, and a first dispersing agent; and
the second dispersion solution comprises: a bivalent iron source, a complexing agent, and a second dispersing agent.

10. The preparation method for a Prussian blue cathode material according to claim 9, wherein the ferrocyanide source and the first sodium source are derived from sodium ferrocyanide; and/or,
the bivalent iron source is derived from a bivalent iron salt, and the bivalent iron salt is selected from one or more of FeSO₄·7H₂O, Fe(NO₃)₂, and FeCl₂·4H₂O; and/or,
the complexing agent is selected from one or more of anhydrous sodium citrate, sodium citrate dihydrate, sodium citrate pentahydrate, sodium oxalate, sodium tartrate, and sodium malate.

11. The preparation method for a Prussian blue cathode material according to claim 9, wherein the first dispersing agent comprises: deionized water and a first solvent, wherein the ferrocyanide source is insoluble in the first solvent; and/or,
the second dispersing agent comprises: deionized water and a second solvent, wherein the ferrocyanide source is insoluble in the second solvent; and/or,
the first solvent and the second solvent are independently selected from one or more of ethylene glycol, N,N-dimethylformamide, ethanol, and glycerol, respectively.

12. The preparation method for a Prussian blue cathode material according to claim 11, wherein a volume ratio of the deionized water and the first solvent in the first dispersing agent is selected from 1:(0.01-100); and/or,
a volume ratio of the deionized water and the second solvent in the second dispersing agent is selected from 1:(0.01-100).

13. The preparation method for a Prussian blue cathode material according to any one of claims 9-12, wherein the first dispersion solution further comprises a carbonaceous material.

14. The preparation method for a Prussian blue cathode material according to claim 13, wherein a molar ratio of the carbonaceous material and the ferrocyanide source is selected from 1:(0.01-100); and/or,
a molar ratio of the ferrocyanide source and the bivalent iron source is selected from 1:(1-3); and/or,
a molar ratio of the bivalent iron source and the complexing agent is selected from 1:(1-100).

15. A cathode sheet, wherein the cathode sheet comprises the Prussian blue cathode material according to any one of claims 1-8; and alternatively, the cathode sheet comprises a Prussian blue cathode material obtained by the preparation method for a Prussian blue cathode material according to any one of claims 9-14.

16. A sodium-ion battery, comprising: the Prussian blue cathode material according to any one of claims 1-8, or a Prussian blue cathode material obtained by the preparation method for a Prussian blue cathode material according to any one of claims 9-14, or the cathode sheet according to claim 15.
